# EUROPÄISCHE PATENTSCHRIFT

(11) **EP 1 305 167 B1**
(45) Veröffentlichungstag und Bekanntmachung des Hinweises auf die Patenterteilung: **17.12.2003**
(21) Anmeldenummer: 01951203.7
(22) Anmeldetag: 16.07.2001
(51) Int. Cl.: B41M 1/10, B41M 1/04, C09D 11/02

(54) **VERFAHREN ZUR ERZEUGUNG EINES DRUCKBILDES MIT MATT- UND BRILLANTEFFEKT**
METHOD FOR THE PRODUCTION OF A PRINTED IMAGE WITH MATT AND GLOSS EFFECT
PROCEDE PERMETTANT DE PRODUIRE UNE IMAGE D'IMPRESSION A EFFET MAT ET BRILLANT

(30) Priorität: 03.08.2000 AT 13532000
(43) Veröffentlichungstag der Anmeldung: 02.05.2003
(73) Patentinhaber: TEICH Aktiengesellschaft, 3200 Weinburg (AT)
(72) Erfinder: CISLINSKY, Gerhard, A-1190 Wien (AT); DORFNER, Johann, A-3200 Ober-Grafendorf (AT); ERBER, Sabine, A-3200 Ober-Grafendorf (AT); HUMER, Friedrich, A-3100 St. Pölten (AT); KAUFMANN, Manfred, A-1100 Wien (AT); KÖNIG, Roman, A-3200 Ober-Grafendorf (AT); NEKULA, Lambert, A-3202 Hofstetten (AT); NIEDERER, Andreas, A-3390 Melk (AT); SCHEDL, Adolf, A-3200 Ober-Grafendorf (AT); ZUSER, Wilhelm, A-3202 Hofstetten (AT); REITERER, Franz, A-3131 Getzersdorf Nr. 141 (AT)
(74) Vertreter: DUNGLER, Karin c/o BEER & PATENTANWÄLTE KEG
(86) Internationale Anmeldenummer: AT0100239
(87) Internationale Veröffentlichungsnummer: WO02011993

(56) Entgegenhaltungen:
- WO-A-01/32433
- DE-A- 3 344 131
- DE-C- 3 720 700
- US-B1- 6 245 136

## Beschreibung

### Technisches Gebiet

Die Erfindung betrifft ein Verfahren zur Erzeugung eines Druckbildes mit Matt- und Brillanteffekt auf flächigen und faltbaren Verpakkungsmaterialbahnen.

### Stand der Technik

Flächige und faltbare Verpackungsmaterialbahnen werden beispielsweise zur Ausbildung einer inneren Packungshülle für Schokoladepakkungen verwendet. Dabei wird die Schokoladetafel in das flächige und faltbare Verpackungsmaterial, beispielsweise eine Aluminiumfolie oder einen Aluminiumfolienverbund, eingeschlagen. Danach wird diese innere Packungshülle in den meisten Fällen mit einer äußeren, aus Papier bestehenden Verpackungshülle versehen. Diese weist die für den Konsumenten wesentlichen Hinweise wie Schokoladensorte, gegebenenfalls in Kombination mit der entsprechenden Marke auf. Da die Konsumenten immer anspruchsvoller und das Angebot an Schokoladesorten immer vielfältiger wird, stellt auch die Marke ein wesentliches Kriterium dar. Man ist daher dazu übergegangen, die Marke nicht nur auf der Papierhülle, sondern auch auf der inneren Packungshülle anzubringen. Dadurch ist der Konsument auch dann über die Marke informiert, wenn die Papierhülle bereits abgenommen wurde.

Diese Marken werden durch Prägeverfahren an den üblicherweise folienartigen Verpackungsmaterialien erzeugt. Dabei werden die Verpakkungsmaterialbahnen zwischen einer oder zwei Prägewalzen geführt, welche an ihrer Oberfläche erhabene Strukturen aufweisen, die der jeweiligen Markendarstellung entsprechen. Nach dem Prägen weisen die Verpackungsmaterialbahnen die Marke leicht und mit entsprechendem Brillanteffekt auf, wogegen der verbleibende Verpackungsmaterialbereich matt erscheint. Durch diesen Kontrast ist die Marke für den Konsumenten einwandfrei erkennbar.

Dennoch haben Prägeverfahren den Nachteil, daß durch die Zugkräfte, die auf das zu prägende Material wirken, das entstandene Prägebild verzerrt wird. Dadurch können die hohen Anforderungen, die Konsumenten mittlerweile auch an Verpackungsmaterialien stellen, nicht erfüllt werden. Weiters hat es sich gezeigt, daß durch die während des Prägeverfahrens entstandenen Zugkräfte undichte Stellen in den relativ dünnen Verpackungsmaterialien auftreten können. Jede undichte Stelle im Verpackungsmaterial führt jedoch dazu, daß das Verpakkungsgut, wie beispielsweise die Schokoladetafel, frühzeitig verdirbt.

Aufgabe der vorliegenden Erfindung ist es, diese vorbekannten Nachteile zu vermeiden, wobei jedoch der Konsument weiterhin einen optisch einwandfreien Gesamteindruck sowie ausreichende Informationen betreffend Verpackungsinhalt durch das Verpackungsmaterial erhalten soll.

### Darstellung der Erfindung

Diese Aufgabe wird erfindungsgemäß mit Hilfe des eingangs genannten Verfahrens nach Anspruch 1 gelöst, welches dadurch gekennzeichnet ist, daß auf die Verpackungsmaterialbahn ein Druckfarbensystem aufgetragen wird, welches den Matteffekt erzeugende vorzugsweise anorganische Additive enthält, wobei die Bereiche für die Ausbildung des brillanten Druckbildes ausgespart werden. Als besonders bevorzugte Additive, welche den Matteffekt im Druckbild erzeugen, haben sich Kieselsäure und/oder Talcum sowie Mischungen daraus erwiesen. Dieser Matteffekt wird noch weiter verstärkt, wenn den Additiven Interferenzpigmente zugesetzt werden. Sowohl durch die Additive als auch durch die Interferenzpigmente werden die Lichtstrahlen ungerichtet reflektiert, so daß sich für den Konsumenten ein diffuses, und dadurch mattes Druckbild ergibt.

Die Bereiche mit Brillanteffekt, welche beispielsweise in Form einer Marke ausgebildet werden können, werden erfindungsgemäß dadurch erzeugt, daß das Druckfarbensystem mittels Druckwerkzeugen aufgetragen wird, an welchen die Bereiche des brillanten Druckbildes in Form der entsprechenden Negativbilder ausgespart sind. Als Druckwerkzeuge dienen je nach Druckverfahren Druckwalzen, wie Rasterwalzen, Photopolymer-Sleeves, gelaserte Gummi- sleeves od.dgl..

Erfindungsgemäß werden vorzugsweise als flächige und faltbare Verpackungsmaterialbahnen solche aus Aluminiumfolien bzw. Aluminiumfolienverbunden eingesetzt, welche auch mit einer Vorlackschicht versehen sein können.

### Wege zur Ausführung der Erfindung

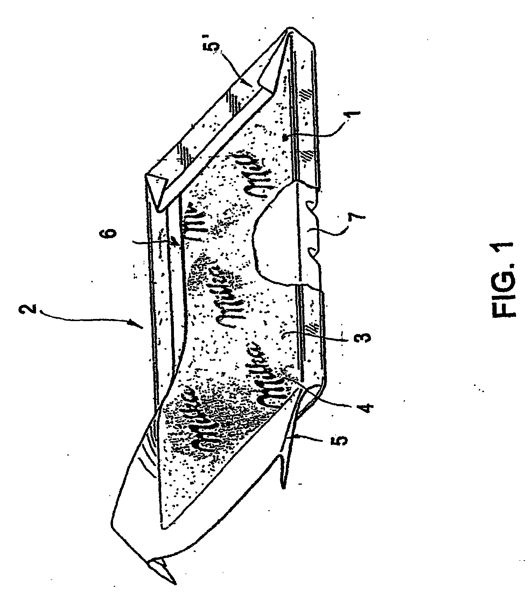

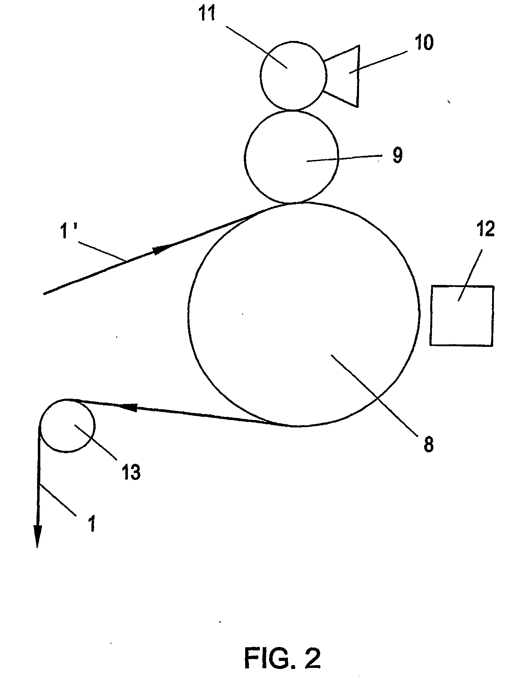

Die Erfindung wird nunmehr an einem Ausführungsbeispiel der Erfindung sowie anhand der Fig. 1 und 2 näher erläutert.
Fig. 1 zeigt eine nach dem erfindungsgemäßen Verfahren erzeugte Verpackungsmaterialbahn, bei deren Verwendung als Packungshülle für eine Schokoladentafel.
Fig. 2 zeigt eine mögliche Ausführungsform zur Durchführung des erfindungsgemäßen Verfahrens.

Beim Erzeugen des Druckbildes kann erfindungsgemäß nach bekannten Verfahren, wie Tiefdruck-, Flexodruck- oder UV-Flexodruckverfahren gearbeitet werden.

Gemäß Fig. 2 wird das Verfahren anhand eines UV-Flexodruckverfahrens näher erläutert. Dabei wird als unbedruckte, flächige und faltbare Verpackungsmaterialbahn 1' beispielsweise eine Aluminiumfolie oder ein Aluminiumfolienverbund eingesetzt. Im Aluminiumfolienverbund wird Papier und/oder orientiertes Polypropylen mit einer Lage Aluminiumfolie kombiniert. Weiters kann die Verpackungsmaterialbahn mit einer Vorlackschicht versehen werden. Für besondere optische Effekte kann der Vorlack beispielsweise Goldpigmente aufweisen. Diese ggf. vorbehandelten Verpackungsmaterialbahn 1' wird zwischen die Druckwalze 9 und die Gegendruckwalze 8 geführt. Die Druckwalze 9 ist mit Näpfchen entsprechend dem Brillantbereich des Druckbildes, beispielsweise in Form einer Marke (nicht dargestellt) ausgebildet. Die Näpfchen stellen die Marke in Form ihres Negativbildes dar, so daß innerhalb dieser Bereiche das Druckfarbensystem mit dem Matteffekt ausgespart wird und dadurch der silbrig-glänzende Brillanteffekt der Aluminiumfolie erhalten bleibt. Ist die Aluminiumfolie mit einer Vorlackschicht mit Gold-Pigmenten versehen, so wird analog zu unlackierten Folien das Druckbild für den Brillanteffekt ausgespart. Somit tritt die Marke beispielsweise gold-brillant hervor, wogegen der restliche Folienbereich gold-matt erscheint. Das Druckfarbensystem wird mittels einer Rakel 10 und einer Rasterwalze 11 auf die Druckwalze 9 übertragen. Die im Druckfarbensystem üblichen Bindemittel werden mittels eines UV-Strahlers 12 vernetzt, so daß die mit dem Druckbild versehene Verpackungsmaterialbahn 1 über eine Umlenkwalze 13 dem Druckvorgang entnommen wird.

Fig. 1 zeigt eine nach der vorgenannten Ausführungsform des erfindungsgemäßen Verfahrens bedruckteVerpackungsmaterialbahn 1, welche in bekannter Weise als Packungshülle 2 um eine Schokoladetafel 7 gefaltet ist. Dieses Falten erfolgt derart, daß in Querrichtung jeweils Faltungen 5 und 5' ausgebildet werden, wogegen in Längsrichtung eine Materialfaltung 6 ausgebildet wird. An dieser ist zu ersehen, daß die Verpackungsmaterialbahnen 1 überlappend im Bereich der Faltung um die Schokoladetafel 7 geschlagen wird. Dies ist insbesondere deshalb notwendig, da im Bereich der Faltungen das Verpackungsmaterial 1 mit einem Siegelmedium (nicht dargestellt) versehen ist.

Nach dem Abnehmen der äusseren Papierhülle mit Informationen betreffend Sorte und Marke ergibt sich diese für den Konsumenten trotzdem weiterhin, da die mit Brillanteffekt hervortretenden Marken 4, deren Brillanteffekt dadurch verstärkt ist, daß der übrige Bereich 3 des Verpackungsmaterials einen Matteffekt zeigt, auch an der inneren Packungshülle vorliegen.

### Gewerbliche Anwendbarkeit

Durch das erfindungsgemäße Verfahren werden ganz allgemein an flächigen, faltbaren Verpackungsmaterialbahnen Bereiche mit einem brillanten Druckbild erzeugt, dessen brillantes Erscheinungsbild und Aussehen durch das im übrigen Verpackungsmaterialbereich erzeugte matte Druckbild noch zusätzlich verstärkt wird. Das brillante Druckbild kann beispielsweise eine Marke darstellen, so daß der Konsument auch nach teilweisem Öffnen der Packung ausreichend Information hinsichtlich Verpackungsgut erhält. Weiters muß durch Verwendung des erfindungsgemäßen Verfahrens nicht wie bei den bekannten Prägeverfahren mit etwaigen undichten Stellen in der Verpackungsmaterialbahn gerechnet werden, da die aufgewendeten Zugkräfte, wenn überhaupt, nur in geringem Ausmaß entstehen.

Zusammenfassend kann ein Ausführungsbeispiel der Erfindung wie folgt beschrieben werden:

Es wird ein Verfahren zum Erzeugen eines Druckbildes mit Matt- und Brillanteffekt angegeben, wobei auf eine flächige und faltbare Verpackungsmaterialbahn ein Druckfarbensystem aufgetragen wird, welches den Matteffekt erzeugende Additive enthält. Das Druckbild kann mit jedem an sich bekannten Druckverfahren erzeugt werden, wobei jedoch die Bereiche für die Ausbildung des brillanten Druckbildes ausgespart werden. Als brillante Druckbilder können beispielsweise Marken dienen, welche im Kontrast zum verbleibenden matten Druckbild stehen und demgemäß für den Konsumenten einwandfrei erkennbar sind. Der Kontrast zwischen matten und brillanten Druckbild kann zusätzlich durch die Zugabe von Interferenzpigmenten verstärkt werden.

## Patentansprüche

1. Verfahren zum Erzeugen eines Druckbildes mit Matt- und Brillanteffekt auf flächigen und faltbaren Verpackungsmaterialbahnen, **dadurch gekennzeichnet, daß** auf die Verpackungsmaterialbahn ein Druckfarbensystem aufgetragen wird, welches den Matteffekt erzeugende Additive enthält, wobei beim Auftragen des Druckfarbensystems Bereiche für die Ausbildung des brillanten Druckbildes ausgespart werden.

2. Verfahren nach Anspruch 1, **dadurch gekennzeichnet, daß** das den Matteffekt erzeugende Additiv Kieselsäure und/oder Talcum sowie Mischungen daraus ist.

3. verfahren nach Anspruch 1 oder 2, **dadurch gekennzeichnet, daß** das den Matteffekt erzeugende Additiv zusätzlich Interferenzpigmente enthält.

4. Verfahren nach einem der Ansprüche 1 bis 3, **dadurch gekennzeichnet, daß** das Druckfarbensystem mittels Druckwerkzeugen aufgetragen wird, an welchen die Bereiche des brillanten Druckbildes in negativer Form ausgespart sind.

5. Verfahren nach einem der Ansprüche 1 bis 4, **dadurch gekennzeichnet, daß** als flächiges und faltbares Verpackungsmaterial Aluminiumfolien oder Aluminiumfolienverbunde eingesetzt werden.

6. Verfahren nach Anspruch 5, **dadurch gekennzeichnet, daß** die Aluminiumfolie oder der Aluminiumfolienverbund mit einer Vorlackschicht versehen ist.

## Claims

1. Method for producing a printed image with matt and gloss effect on flat and foldable packaging material webs, **characterised in that** a printing colour system is applied on the packaging material web, which printing colour system contains additives which produce the matt effect, regions for the formation of the gloss printed image being omitted during the application of the printing colour system.

2. Method according to claim 1, **characterised in that** the additive which produces the matt effect is silicic acid and/or talcum and mixtures thereof.

3. Method according to claim 1 or 2, **characterised in that** the additive which produces the matt effect contains in addition interference pigments.

4. Method according to one of the claims 1 to 3, **characterised in that** the printing colour system is applied by means of printing tools, on which the regions of the gloss printed image in negative form are omitted.

5. Method according to one of the claims 1 to 4, **characterised in that** aluminium foils or aluminium foil composites are used as flat and foldable packaging material.

6. Method according to claim 5, **characterised in that** the aluminium foil or the aluminium foil composite is provided with a layer of undercoat.

## Revendications

1. Procédé permettant de produire une image d'impression à effet mat et à effet brillant sur des bandes de matériau d'emballage plates et pliables, **caractérisé en ce que** sur la bande de matériau d'emballage est déposé un système de couleurs d'impression contenant des additifs produisant l'effet mat, ce dépôt étant effectué en réservant des zones destinées à figurer l'image d'impression brillante

2. Procédé selon la revendication 1 **caractérisé en ce que** l'additif produisant l'effet mat est de l'acide silicique et/ou du talc, ou un mélange de ces corps.

3. Procédé selon la revendication 1 ou 2 **caractérisé en ce que** l'additif produisant l'effet mat contient en plus des pigments d'interférence.

4. Procédé selon une des revendications 1 à 3 **caractérisé en ce que** le système de couleurs d'impression est déposé par des outils d'impression sur lesquels les zones brillantes de l'image d'impression sont réservées sous forme négative.

5. Procédé selon une des revendications 1 à 4 **caractérisé en ce que** des films d'aluminium ou de composites de films d'aluminium sont utilisés comme matériaux d'emballage plats et pliables

6. Procédé selon la revendication 5 **caractérisé en ce que** le film d'aluminium ou de composite de films d'aluminium est prélaqué.
